(19) Europäisches Patentamt
European Patent Office
Office européen des brevets

(11) EP 1 717 075 A1

(12) # EUROPEAN PATENT APPLICATION
published in accordance with Art. 158(3) EPC

(43) Date of publication:
**02.11.2006 Bulletin 2006/44**

(21) Application number: **05709729.7**

(22) Date of filing: **04.02.2005**

(51) Int Cl.:
***B60H 1/32*** *(2006.01)*

(86) International application number:
**PCT/JP2005/001663**

(87) International publication number:
**WO 2005/077689 (25.08.2005 Gazette 2005/34)**

(84) Designated Contracting States:
**DE FR**

(30) Priority: **16.02.2004 JP 2004038595**

(71) Applicant: **Sanden Corporation**
**Isesaki-shi,**
**Gunma 372-8502 (JP)**

(72) Inventor: **SUZUKI, Kenichi**
**Isesaki-shi,**
**Gunma 3728502 (JP)**

(74) Representative: **Haley, Stephen**
**Gill Jennings & Every LLP**
**Broadgate House**
**7 Eldon Street**
**London EC2M 7LH (GB)**

(54) **AIR CONDITIONER**

(57) An air conditioner having in a refrigeration cycle a fixed displacement-type first compression mechanism and a variable displacement-type second compression mechanism independent from each other, and having second compression mechanism displacement control means, compression mechanism operation switching control means, an evaporator for refrigerant, a condenser, a blower, and second compression mechanism feedforward compression displacement calculation means, wherein the compression displacement calculation means calculates the compression displacements during sole operation of the second compression mechanism and during simultaneous operation of the first and second compression mechanisms by using calculating equations different from each other. By carrying out optimum feedforward or/and feedback control in any of different operation conditions, stable adequate air-conditioning control is possible for required cooling performance.

FIG. 2

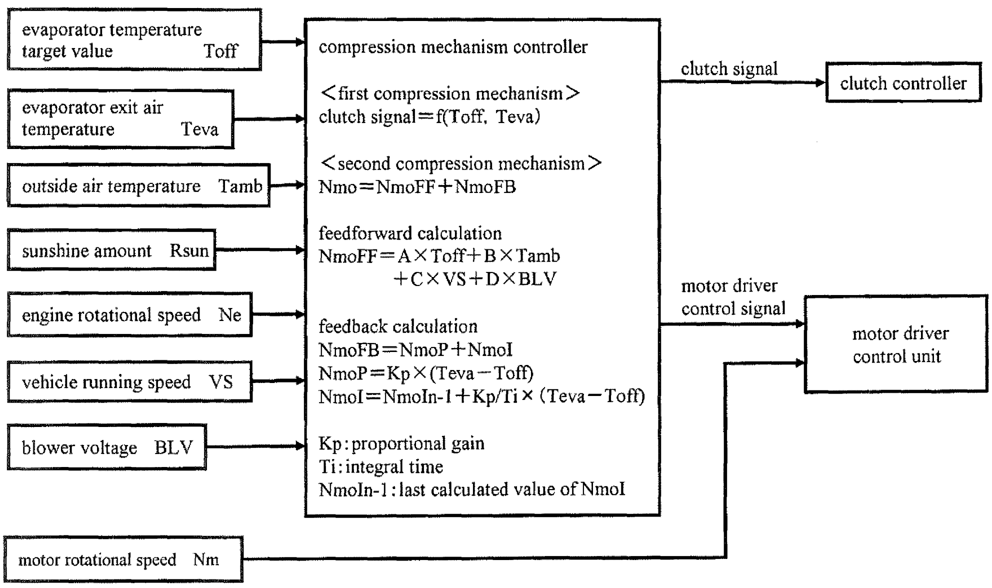


EP 1 717 075 A1

## Description

The present invention relates to an air conditioner with a refrigeration cycle having a compressor for refrigerant, and more specifically, to an air conditioner suitable for controlling a refrigeration cycle having a fixed displacement compression mechanism and a variable displacement compression mechanism independent from each other.

In conventional air conditioners, for example, in air conditioners for work vehicles, there is a structure in which a compressor of a refrigeration cycle is operated by an engine to form an air conditioner. Further, in a case where a room space of a work vehicle (for example, a space in a cabin) is large, or in a case where a thermal load varies greatly, there is a case where a plurality of compressors are used for a single refrigeration cycle and drive force transmission systems are provided for respective compressors. Furthermore, there is an air conditioner wherein, in a refrigeration cycle having two compressors, one is a fixed displacement-type compressor and the other is a variable displacement-type compressor (for example, Patent document 1).

In a case where two compressors are used, however, when two compressors are simultaneously operated relatively to sole operation of a second compressor, if the displacement control method for the second compressor is same regardless of the operation condition, because the response of evaporator temperature, etc. is different between the time of sole operation and the time of simultaneous operation, there is a problem that it is difficult to properly control the evaporator temperature. Consequently, the control of the evaporator temperature cannot be carried out properly, and it is difficult to control the evaporator temperature adequately and stably for achieving a required cooling performance.

Patent document 1: JP-A-2003-19908

Accordingly, an object of the present invention is to enable a stable and adequate control for air conditioning for achieving a required cooling performance by carrying out optimum feedforward or/and feedback control even in different operation conditions, in an air conditioner with a refrigeration system having two compression mechanisms of one fixed displacement-type compression mechanism and the other variable displacement-type compression mechanism capable of being changed in displacement, and to provide an air conditioner suitable, for example, for a cabin of a work vehicle.

To achieve the above object, an air conditioner according to the present invention has, in a refrigeration cycle, two compression mechanisms of a fixed displacement-type first compression mechanism and a variable displacement-type second compression mechanism independent from each other, and has second compression mechanism displacement control means for controlling a displacement of the second compression mechanism, compression mechanism operation switching control means for switching to an operation by the two compression mechanisms or an operation by any one compression mechanism, an evaporator for refrigerant for cooling air for air conditioning, a condenser for refrigerant, a blower for sending air to the evaporator, and second compression mechanism feedforward compression displacement calculation means for calculating a compression displacement for feedforward control in the second compression mechanism, and wherein, the second compression mechanism feedforward compression displacement calculation means calculates compression displacements for a time of sole operation of the second compression mechanism and a time of simultaneous operation of the first and second compression mechanisms, respectively, by using second compression mechanism feedforward compression displacement calculating equations different from each other (a first structure).

Further, an air conditioner according to the present invention has, in a refrigeration cycle, two compression mechanisms of a fixed displacement-type first compression mechanism and a variable displacement-type second compression mechanism independent from each other, and has second compression mechanism displacement control means for controlling a displacement of the second compression mechanism, compression mechanism operation switching control means for switching to an operation by the two compression mechanisms or an operation by any one compression mechanism, an evaporator for refrigerant for cooling air for air conditioning, a condenser for refrigerant, a blower for sending air to the evaporator, evaporator temperature detection means for detecting a temperature of the evaporator or a temperature of air at an exit of the evaporator, evaporator target temperature calculation means for calculating a target temperature of the evaporator temperature or the evaporator exit air temperature, and second compression mechanism feedback compression displacement calculation means for calculating a feedback compression displacement in the second compression mechanism by referring to a deviation between the evaporator temperature or the evaporator exit air temperature and the target temperature of the evaporator temperature or the evaporator exit air temperature, and wherein, the second compression mechanism feedback compression displacement calculation means calculates feedback compression displacements for a time of sole operation of the second compression mechanism and a time of simultaneous operation of the first and second compression mechanisms, respectively, by using second compression mechanism feedback compression displacement calculating equations with coefficients different from each other (a second structure).

Furthermore, the above-described first and second structures may be combined in the present invention. Namely, an air conditioner according to the present invention has, in a refrigeration cycle, two compression mechanisms of a fixed displacement-type first compression mechanism and a variable displacement-type second compression mechanism independent from each other, and has second compression mechanism displacement control means for controlling a displacement of the second compression mechanism, compression mechanism operation switching control means for switching to an operation by the two compression mechanisms or an operation by any one compression mechanism, an evaporator for refrigerant for cooling air for air conditioning, a condenser for refrigerant, a blower for sending air to the evaporator, second compression mechanism feedforward compression displacement calculation means for calculating a compression displacement for feedforward control in the second compression mechanism, evaporator temperature detection means for detecting a temperature of the evaporator or a temperature of air at an exit of the evaporator, evaporator target temperature calculation means for calculating a target temperature of the evaporator temperature or the evaporator exit air temperature, and second compression mechanism feedback compression displacement calculation means for calculating a feedback compression displacement in the second compression mechanism by referring to a deviation between the evaporator temperature or the evaporator exit air temperature and the target temperature of the evaporator temperature or the evaporator exit air temperature, and wherein, the second compression mechanism feedforward compression displacement calculation means calculates compression displacements for a time of sole operation of the second compression mechanism and a time of simultaneous operation of the first and second compression mechanisms, respectively, by using second compression mechanism feedforward compression displacement calculating equations different from each other, and the second compression mechanism feedback compression displacement calculation means calculates feedback compression displacements for a time of sole operation of the second compression mechanism and a time of simultaneous operation of the first and second compression mechanisms, respectively, by using second compression mechanism feedback compression displacement calculating equations with coefficients different from each other (a third structure).

In the air conditioner according to this third structure, it is preferred that, when the compressor operation is switched by the compression mechanism operation switching control means from a sole operation of the first compression mechanism to the simultaneous operation of the first compression mechanism and the second compression mechanism, within a predetermined time, the displacement of the second compression mechanism is controlled by the second compression mechanism displacement control means to switch the compressor operation to the simultaneous operation, by referring to only the second compression mechanism feedforward compression displacement without referring to the feedback compression displacement calculated by the second compression mechanism feedback compression displacement calculation means.

Further, in the above-described air conditioners, it is preferred that the second compression mechanism feedforward compression displacement calculation means calculates second compression mechanism feedforward compression displacements by referring to a thermal load to the refrigeration cycle for the time of sole operation of the second compression mechanism, and by referring to the thermal load to the refrigeration cycle and a rotational speed of a prime mover which is a drive source of the first compression mechanism or/and a running speed of a vehicle driven by the prime mover for the time of simultaneous operation of the first and second compression mechanisms, respectively.

The above-described predetermined time may be calculated by a thermal load to the refrigeration cycle and a rotational speed of the prime mover which is a drive source of the first compression mechanism or/and a running speed of a vehicle driven by the prime mover.

Further, the above-described thermal load to the refrigeration cycle may be calculated by detecting an outside air temperature, an room interior temperature, an amount of blown air or a physical value having a correlation with the amount of blown air, and an amount of sunshine, or by detecting at least one of those.

In the air conditioners according to the present invention, the above-described second compression mechanism may comprise a variable displacement compression mechanism controlled by a displacement control signal, or a variable displacement compression mechanism controlled by control of rotational speed.

The air conditioner according to the present invention performing such a feedforward or/and feedback control is suitable as an air conditioner for vehicles, especially, as an air conditioner for work vehicles.

In the air conditioner according to the present invention, with respect to the displacement control method of the second compression mechanism, an optimum feedforward or/and feedback control may be carried out even for an operation of the simultaneous operation or the sole operation of the second compression mechanism different from each other, and by this, it becomes possible to carry out a stable and adequate control for air conditioning for achieving a required cooling performance.

**In the drawing:**

[Fig. 1] Fig. 1 is a schematic equipment disposition diagram of an air conditioner according to an embodiment of the present invention.

[Fig. 2] Fig. 2 is a block diagram showing an example of control of the air conditioner depicted in Fig. 1.

[Fig. 3] Fig. 3 is a flowchart showing an example of control of the air conditioner depicted in Fig. 1.

1: air conditioner
2: air duct
3: introduction port for outside air or/and inside air
4: blower
5: evaporator
6: refrigeration cycle
7: main controller
8: drive control signal
9: first compression mechanism
10: discharge displacement signal
11: displacement control signal
12: second compression mechanism
13: condenser
14: liquid receiver
15: expansion valve
16: evaporator exit air temperature sensor
17: vehicle interior temperature sensor
18: outside air temperature sensor
19: sunshine sensor

Hereinafter, desirable embodiments of the present invention will be explained referring to figures.

Fig. 1 shows a schematic equipment disposition diagram of an air conditioner according to an embodiment of the present invention, for example, an air conditioner for work vehicles. In air conditioner 1 depicted in Fig. 1, a blower 4 for sending air sucked through an introduction port 3 for outside air or/and inside air is provided at an upstream position in an air duct 2 opening toward a room interior (for example, the interior of a cabin). An evaporator 5 is provided at a position downstream blower 4 as a cooler for cooling air sent. Although not shown in the figure, as needed, a heater core as a heater may be provided downstream evaporator 5. The air having passed through evaporator 5 and having been cooled is blown into the room interior.

A refrigeration cycle 6 with the above-described evaporator 5 is provided in the above-described air conditioner 1. Refrigeration cycle 6 is constructed as a refrigerant circuit in which respective equipment are connected via refrigerant tubes, and in this refrigeration cycle 6, provided are a fixed displacement-type first compression mechanism 9 whose drive source is a prime mover (for example, an engine), etc. and whose drive is controlled by a drive control signal 8 sent from a main controller 7, and a variable displacement-type second compression mechanism 12 whose discharge displacement signal 10 is sent to main controller 7 and whose displacement is controlled by a displacement control signal 11 sent from main controller 7. In this embodiment, second compression mechanism 12 is driven by an electric motor. In refrigeration cycle 6, a condenser 13 for condensing high-temperature and high-pressure refrigerant compressed by first compression mechanism 9 and/or second compression mechanism 12, a liquid receiver 14 for separating the condensed refrigerant into gas and liquid phases, an expansion valve 15 for reducing in pressure and expanding the refrigerant sent from liquid receiver 14, and evaporator 5 for evaporating the refrigerant sent from expansion valve 15 and cooling the air sent in air duct 2 by heat exchange between the refrigerant and the air, are disposed in this order, and the refrigerant from evaporator 5 is sucked into the above-described compression mechanism and compressed again. The temperature control of evaporator 5 is carried out, for example, by the control of a clutch provided on a drive force transmitting route from the prime mover to the first compression mechanism 9 and a control signal for the electric motor for driving the second compression mechanism 12.

In this embodiment, to main controller 7, sent is a signal of an evaporator exit air temperature (Teva) detected by an evaporator exit air temperature sensor 16 provided as evaporator temperature detection means for detecting a temperature of an evaporator or a temperature of air at an exit of the evaporator (Teva). Further, signals of a vehicle interior temperature (Tin) detected by a vehicle interior temperature sensor 17, an outside air temperature (Tamb) detected by an outside air temperature sensor 18 and an amount of sunshine (Rsun) detected by a sunshine sensor 19 are also sent to main controller 7, respectively.

In this embodiment, the following control is carried out by main controller 7, for example, as shown in Figs. 2 and 3.

The first compression mechanism 9 is a fixed displacement type, it is controlled by a clutch signal, and the clutch signal is calculated from an evaporator temperature target value (Toff) and an evaporator exit air temperature (Teva) detected by evaporator exit air temperature sensor 16 by the following equation.

$$\text{Clutch signal} = f(\text{Toff}, \text{Teva})$$

Then, when second compression mechanism 12 is operated, the evaporator temperature control is carried out by its displacement control means, and it is controlled by controlling the variable displacement mechanism by displacement control signal 11 or by controlling the rotational speed of the electric motor provided for driving second compression mechanism 12. This control method of second compression mechanism 12 will be explained referring to Figs. 2 and 3.

First, with respect to the control method of the second compression mechanism evaporator temperature, the compression displacement of second compression mechanism 12 is controlled by feed forward (FF) calculation term and feedback (FB) calculation term. Where, the FF and FB calculation terms have control manners adapted to operation conditions, respectively. In particular, they are given with a difference for the simultaneous operation of the first and second compression mechanisms as compared with the sole operation of the second compression mechanism. Here, the control method of second compression mechanism 12 for the simultaneous operation in the system will be shown.

Control method for a time of simultaneous operation by first and second compression mechanisms:

(1) When operated simultaneously by first compression mechanism 9 and second compression mechanism 12 (Fig. 3, demand of simultaneous operation [step S1]), signals from respective sensors are inputted (Fig. 3, step S2), a feedforward displacement calculated value is outputted by the feedforward calculation term of second compression mechanism 12 (Fig. 3, step S3), and referring to the calculated value, the compression displacement of second compression mechanism 12 is controlled (Fig. 3, step S4). Where, when operated simultaneously, the feedforward calculation term of second compression mechanism 12 is controlled so that the calculation method of the feedforward calculation term for the sole operation of the second compression mechanism is changed and a feedforward calculation term adapted to the simultaneous operation of the first and second compression mechanisms is employed. Namely, a control value (Nmo) of the compression displacement of second compression mechanism 12 is calculated as the sum of feedforward calculation value (NmoFF) and feedback calculation value (NmoFB) as shown by the following equation, and the feedforward calculation value (NmoFF) is calculated, for example, from an evaporator temperature target value (Toff), an outside air temperature (Tamb), a vehicle running speed (VS) or an engine rotational speed (Ne), a blower voltage (BLV), etc. as follows.

$$\text{Nmo} = \text{NmoFF} + \text{NmoFB}$$

$$\text{NmoFF} = A \times \text{Toff} + B \times \text{Tamb} + C \times \text{VS} + D \times \text{BLV}$$

Where, A, B, C and D are constants.

Similarly, also when the feedback calculation value is used, preferably it is calculated as different values from each other between the time of the sole operation of the second compression mechanism and the time of the simultaneous operation of the first and second compression mechanisms. This is carried out, particularly when the feedback calculation value (NmoFB) is calculated by the following equation, by changing its proportional gain Kp (Fig. 3, step S5). Namely, when operated simultaneously by the first and second compression mechanisms, the control is carried out by the feedforward and feedback calculation terms, and the feedback calculation term of the second compression mechanism is controlled so that the coefficient (the proportional gain) concerning the calculation of the feedback calculation term for the time of the sole operation of the second compression mechanism is changed and a feedback calculation term adapted to the simultaneous operation of the first and second compression mechanisms is employed.

$$\text{NmoFB} = \text{NmoP}(\text{proportional calculation value}) + \text{NmoI}(\text{integral calculation value})$$

$$\text{NmoP} = Kp \times (\text{Teva} - \text{Toff})$$

$$\text{NmoI} = \text{NmoIn-1} + Kp/Ti \times (\text{Teva} - \text{Toff})$$

Where, Kp is a proportional gain, Ti is an integral time, and NmoIn-1 is a previous last calculated value of NmoI.

Further, when the operation is switched from the operation of only first compression mechanism 9 to the simultaneous operation of the first and second compression mechanisms, the operation of second compression mechanism 12 is started and its displacement is controlled by only the feedforward calculation value of the second compression mechanism 12, and within a predetermined time (T) (Fig. 3, step S6 [control delay time calculation]), the output of the feedback calculation term of the second compression mechanism 12 is restricted or the calculation is stopped, and after the predetermined time (T) passes (after determining the passing of the predetermined time (T) [Fig. 3, step S7]), the restriction or the stop of the feedback calculation term is cancelled, and thereafter, the feedforward and feedback control of the displacement of the second compression mechanism is carried out (Fig. 3, step S8). An example of the flow for such a control is shown in Fig. 3. Namely, the start is carried out by the feedforward control, and the feedback control is restricted or its calculation is stopped for a predetermined time.

By such a control, it becomes possible to carry out an optimum feedforward or/and feedback control for both the simultaneous operation and the sole operation of the second compression mechanism different from each other. Therefore, a stable and optimum control for air conditioning may be carried out for achieving a required cooling performance.

The air conditioner according to the present invention can be suitably applied to any refrigeration cycle having a fixed displacement compression mechanism and a variable displacement compression mechanism independent from each other, and in particular, it is suitable as an air conditioner for a cabin of a work vehicle violent in variation of thermal load.

## Claims

1. An air conditioner having in a refrigeration cycle two compression mechanisms of a fixed displacement-type first compression mechanism and a variable displacement-type second compression mechanism independent from each other, and having second compression mechanism displacement control means for controlling a displacement of said second compression mechanism, compression mechanism operation switching control means for switching to an operation by said two compression mechanisms or an operation by any one compression mechanism, an evaporator for refrigerant for cooling air for air conditioning, a condenser for refrigerant, a blower for sending air to said evaporator, and second compression mechanism feedforward compression displacement calculation means for calculating a compression displacement for feedforward control in said second compression mechanism, wherein said second compression mechanism feedforward compression displacement calculation means calculates compression displacements for a time of sole operation of said second compression mechanism and a time of simultaneous operation of said first and second compression mechanisms, respectively, by using second compression mechanism feedforward compression displacement calculating equations different from each other.

2. The air conditioner according to claim 1, wherein said second compression mechanism feedforward compression displacement calculation means calculates second compression mechanism feedforward compression displacements by referring to a thermal load to said refrigeration cycle for said time of sole operation of said second compression mechanism, and by referring to said thermal load to said refrigeration cycle and a rotational speed of a prime mover which is a drive source of said first compression mechanism or/and a running speed of a vehicle driven by said prime mover for said time of simultaneous operation of said first and second compression mechanisms, respectively.

3. The air conditioner according to claim 2, wherein said thermal load to said refrigeration cycle is calculated by detecting an outside air temperature, an room interior temperature, an amount of blown air or a physical value having a correlation with said amount of blown air, and an amount of sunshine, or by detecting at least one of those.

4. The air conditioner according to claim 1, wherein said second compression mechanism comprises a variable displacement compression mechanism controlled by a displacement control signal, or a variable displacement compression mechanism controlled by control of rotational speed.

5. An air conditioner having in a refrigeration cycle two compression mechanisms of a fixed displacement-type first compression mechanism and a variable displacement-type second compression mechanism independent from each other, and having second compression mechanism displacement control means for controlling a displacement of said second compression mechanism, compression mechanism operation switching control means for switching to an operation by said two compression mechanisms or an operation by any one compression mechanism, an evaporator for refrigerant for cooling air for air conditioning, a condenser for refrigerant, a blower for sending air to said evaporator, evaporator temperature detection means for detecting a temperature of said evaporator or a temperature of air at an exit of said evaporator, evaporator target temperature calculation means for calculating a target temperature of said evaporator temperature or said evaporator exit air temperature, and second compression mechanism feedback compression displacement calculation means for calculating a feedback compression displacement in said second compression mechanism by referring to a deviation between said evaporator temperature or said evaporator exit air temperature and said target temperature of said evaporator temperature or said evaporator exit air temperature, wherein said second compression mechanism feedback compression displacement calculation means calculates feedback compression displacements for a time of sole operation of said second compression mechanism and a time of simultaneous operation of said first and second compression mechanisms, respectively, by using second compression mechanism feedback compression displacement calculating equations with coefficients different from each other.

**6.** The air conditioner according to claim 5, wherein said second compression mechanism comprises a variable displacement compression mechanism controlled by a displacement control signal, or a variable displacement compression mechanism controlled by control of rotational speed.

**7.** An air conditioner having in a refrigeration cycle two compression mechanisms of a fixed displacement-type first compression mechanism and a variable displacement-type second compression mechanism independent from each other, and having second compression mechanism displacement control means for controlling a displacement of said second compression mechanism, compression mechanism operation switching control means for switching to an operation by said two compression mechanisms or an operation by any one compression mechanism, an evaporator for refrigerant for cooling air for air conditioning, a condenser for refrigerant, a blower for sending air to said evaporator, second compression mechanism feedforward compression displacement calculation means for calculating a compression displacement for feedforward control in said second compression mechanism, evaporator temperature detection means for detecting a temperature of said evaporator or a temperature of air at an exit of said evaporator, evaporator target temperature calculation means for calculating a target temperature of said evaporator temperature or said evaporator exit air temperature, and second compression mechanism feedback compression displacement calculation means for calculating a feedback compression displacement in said second compression mechanism by referring to a deviation between said evaporator temperature or said evaporator exit air temperature and said target temperature of said evaporator temperature or said evaporator exit air temperature, wherein said second compression mechanism feedforward compression displacement calculation means calculates compression displacements for a time of sole operation of said second compression mechanism and a time of simultaneous operation of said first and second compression mechanisms, respectively, by using second compression mechanism feedforward compression displacement calculating equations different from each other, and said second compression mechanism feedback compression displacement calculation means calculates feedback compression displacements for a time of sole operation of said second compression mechanism and a time of simultaneous operation of said first and second compression mechanisms, respectively, by using second compression mechanism feedback compression displacement calculating equations with coefficients different from each other.

**8.** The air conditioner according to claim 7, wherein, when compressor operation is switched by said compression mechanism operation switching control means from a sole operation of said first compression mechanism to said simultaneous operation of said first compression mechanism and said second compression mechanism, within a predetermined time, said displacement of said second compression mechanism is controlled by said second compression mechanism displacement control means to switch the compressor operation to said simultaneous operation, by referring to only said second compression mechanism feedforward compression displacement without referring to said feedback compression displacement calculated by said second compression mechanism feedback compression displacement calculation means.

**9.** The air conditioner according to claim 7, wherein said second compression mechanism feedforward compression displacement calculation means calculates second compression mechanism feedforward compression displacements by referring to a thermal load to said refrigeration cycle for said time of sole operation of said second compression mechanism, and by referring to said thermal load to said refrigeration cycle and a rotational speed of a prime mover which is a drive source of said first compression mechanism or/and a running speed of a vehicle driven by said prime mover for said time of simultaneous operation of said first and second compression mechanisms, respectively.

**10.** The air conditioner according to claim 8, wherein said predetermined time is calculated by a thermal load to said refrigeration cycle and a rotational speed of a prime mover which is a drive source of said first compression mechanism or/and a running speed of a vehicle driven by said prime mover.

**11.** The air conditioner according to claim 9, wherein said thermal load to said refrigeration cycle is calculated by detecting an outside air temperature, an room interior temperature, an amount of blown air or a physical value having a correlation with said amount of blown air, and an amount of sunshine, or by detecting at least one of those.

**12.** The air conditioner according to claim 7, wherein said second compression mechanism comprises a variable displacement compression mechanism controlled by a displacement control signal, or a variable displacement compression mechanism controlled by control of rotational speed.

FIG. 1

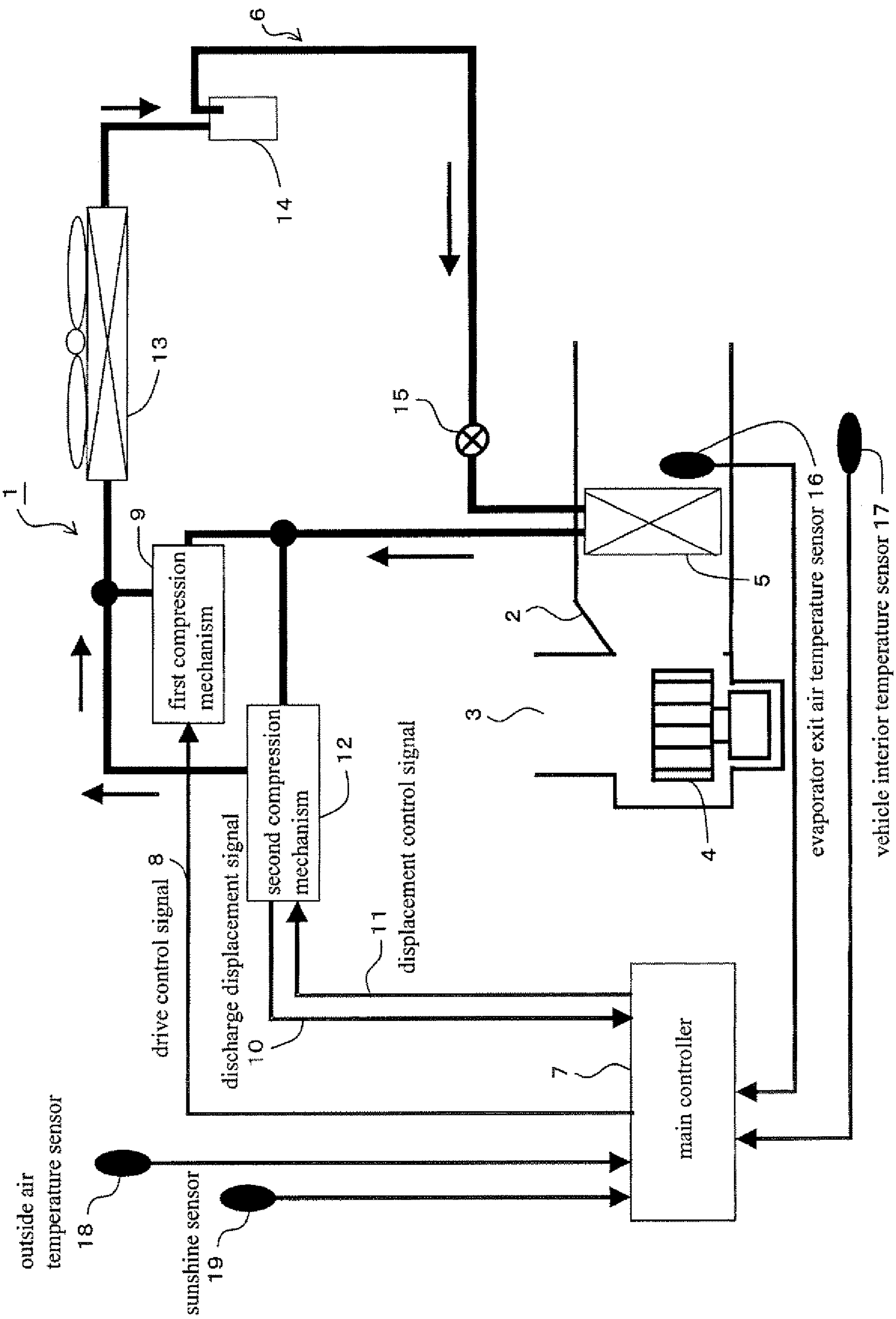
first compression mechanism
second compression mechanism
drive control signal
discharge displacement signal
displacement control signal
main controller
outside air temperature sensor
sunshine sensor
evaporator exit air temperature sensor 16
vehicle interior temperature sensor 17

FIG. 2

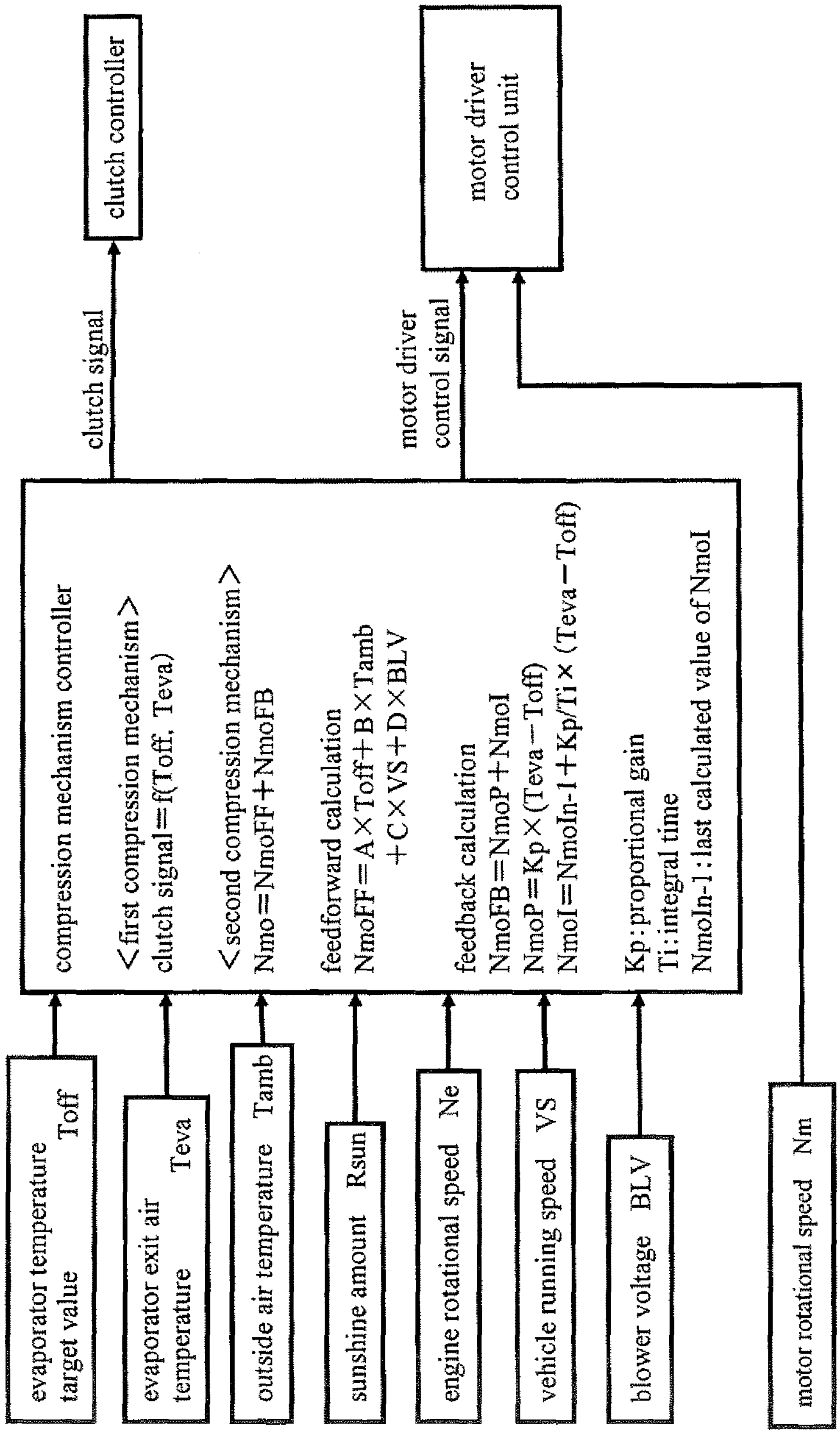
evaporator temperature target value Toff
evaporator exit air temperature Teva
outside air temperature Tamb
sunshine amount Rsun
engine rotational speed Ne
vehicle running speed VS
blower voltage BLV
motor rotational speed Nm
compression mechanism controller
<first compression mechanism>
clutch signal=f(Toff, Teva)
<second compression mechanism>
Nmo=NmoFF+NmoFB
feedforward calculation
NmoFF=A×Toff+B×Tamb
+C×VS+D×BLV
feedback calculation
NmoFB=NmoP+NmoI
NmoP=Kp×(Teva−Toff)
NmoI=NmoIn-1+Kp/Ti×(Teva−Toff)
Kp: proportional gain
Ti: integral time
NmoIn-1: last calculated value of NmoI
clutch signal
clutch controller
motor driver control signal
motor driver control unit

FIG. 3

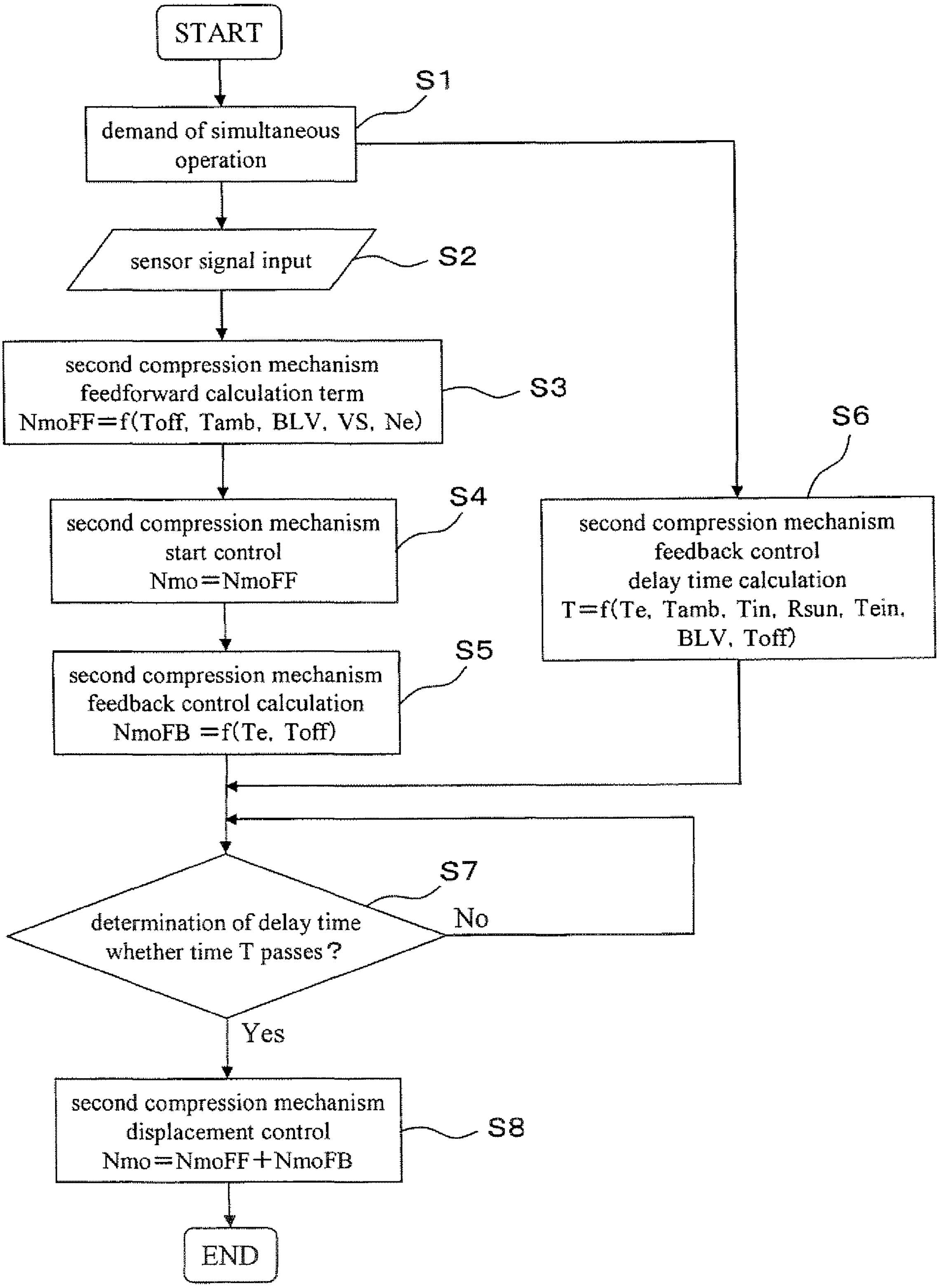
START
S1
demand of simultaneous operation
sensor signal input
S2
second compression mechanism feedforward calculation term NmoFF=f(Toff, Tamb, BLV, VS, Ne)
S3
S6
S4
second compression mechanism start control Nmo=NmoFF
second compression mechanism feedback control delay time calculation T=f(Te, Tamb, Tin, Rsun, Tein, BLV, Toff)
S5
second compression mechanism feedback control calculation NmoFB =f(Te, Toff)
S7
determination of delay time whether time T passes?
No
Yes
second compression mechanism displacement control Nmo=NmoFF+NmoFB
S8
END

## INTERNATIONAL SEARCH REPORT

International application No.
PCT/JP2005/001663

A. CLASSIFICATION OF SUBJECT MATTER
Int.Cl[7] B60H1/32

According to International Patent Classification (IPC) or to both national classification and IPC

B. FIELDS SEARCHED

Minimum documentation searched (classification system followed by classification symbols)
Int.Cl[7] B60H1/32, F25B1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br><br>A | JP 5-106931 A (Matsushita Refrigeration Co.), 27 April, 1993 (27.04.93), Par. Nos. [0003], [0006], [0010] to [0015]; Figs. 1 to 3, 5 (Family: none) | 1,4<br>2,3,7,9,11,<br>12<br>8,10 |
| X<br>Y<br>A | JP 63-172863 A (Daikin Industries, Ltd.), 16 July, 1988 (16.07.88), Page 2, upper right column, line 18 to page 3, upper left column, line 18; page 4, lower left column, line 10 to page 4, lower right column, line 17; tables 1, 2; Figs. 1, 2, 4 (Family: none) | 5,6<br>7,9,11,12<br>8,10 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>29 March, 2005 (29.03.05) | Date of mailing of the international search report<br>12 April, 2005 (12.04.05) |
| Name and mailing address of the ISA/<br>Japanese Patent Office<br><br>Facsimile No. | Authorized officer<br><br>Telephone No. |

Form PCT/ISA/210 (second sheet) (January 2004)

**INTERNATIONAL SEARCH REPORT**

International application No.
PCT/JP2005/001663

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-211953 A (Sanden Corp.),<br>30 July, 2003 (30.07.03),<br>Claims 8, 9<br>& US 2003/0136138 A1 & EP 1331115 A2 | 2,3,9,11 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003019908 A